# EUROPÄISCHE PATENTSCHRIFT

(11) **EP 0 716 962 B1**
(45) Veröffentlichungstag und Bekanntmachung des Hinweises auf die Patenterteilung: **03.03.1999**
(21) Anmeldenummer: 95119272.3
(22) Anmeldetag: 07.12.1995
(51) Int. Cl.: B60R 21/20

(54) **Airbagmodul**
Airbag Assembly
Coussin pneumatique de sécurité

(30) Priorität: 16.12.1994 DE 4444834
(43) Veröffentlichungstag der Anmeldung: 19.06.1996
(73) Patentinhaber: ADAM OPEL AG, 65423 Rüsselsheim (DE)
(72) Erfinder: Rick, Ulrich, Dipl.-Ing., D-55595 Roxheim (DE); Klenk, Jürgen, Dipl.-Ing., D-65468 Geinsheim (DE)
(74) Vertreter: Kümpfel, Heinz, Dipl.-Ing.

(56) Entgegenhaltungen:
- EP-A- 0 461 757
- EP-A- 0 601 489
- DE-A- 2 061 757
- US-A- 3 778 085

## Beschreibung

Die Erfindung betrifft einen Airbagmodul zur Anordnung als Aufprallschutz für Fahrzeuginsassen eines Kraftfahrzeuges mit einem als Strangpreßprofil vorgefertigten Gehäuse, zwei die Stirnseiten des Gehäuses bildenden Deckeln, einem im Gehäuse befindlichen gefalteten und mit seinen Rändern am Gehäuse befestigten Gassack, einem unterhalb des Gassackes mit dem Gehäuse verbundenen rohrförmigen Gasgenerator und einer das Gehäuse zum Fahrgastraum hin abschließenden Abdeckung.

Ein derartiger Airbagmodul ist mit DE 42 23 237 C2 beschrieben. Bei diesem bekannten Airbagmodul bildet das als Strangpreßprofil oder Gußteil ausgebildete Gehäuse neben dem Aufnahmeraum für den gefalteten Gassack einen weiteren rohrförmigen Raum, der vom Aufnahmeraum durch eine mit Öffnungen versehene Wand getrennt ist und in welchen der rohrförmige Gasgenerator von einer Stirnseite des Gehäuses her eingesteckt ist.

Bei einem derartigen Airbagmodul ist ein kompliziertes Strangpreßprofil erforderlich, welches auch relativ viel Material erfordert. Außerdem ist die Montage des Gasgenerators dadurch erschwert, daß er von der Stirnseite des Gehäuses her über seine ganze Länge in den rohrförmigen Raum eingeschoben werden muß. Dies ist bei den engen Raumverhältnissen unter der Armaturentafel eines Kraftfahrzeuges nur im ausgebauten Zustand des Airbagmoduls möglich.

Aufgabe der Erfindung ist es, ein Airbagmodul der eingangs genannten Art zu schaffen, welcher gegenüber bekannten mit einem einfacheren Strangpreßprofil und mit geringerem Materialeinsatz auskommt und bei dem der Gasgenerator auch unter beengten Raumverhältnissen montierbar ist.

Erfindungsgemäß wird diese Aufgabe dadurch gelöst, daß das Gehäuse nur einen den Gassack aufnehmenden Raum aufweist, eine Bodenwand unterhalb des Gassackes mit Öffnungen versehen ist, außerhalb des Gehäuses und benachbart zu der Bodenwand Führungsnuten vorgesehen sind, in welchen der Gasgenerator an entlang der Längsachse des Gasgenerators angebrachten Schiebeleisten gehalten ist.

Das Strangpreßprofil, welches im wesentlichen das Gehäuse bildet, muß somit nicht mit einem rohrförmigen Raum versehen sein. Damit ist das Strangpreßprofil in der Herstellung erheblich einfacher. Da damit auch das Material für die Bildung des rohrförmigen Raumes nicht erforderlich ist, kann auch Material und somit auch Gewicht eingespart werden. Das Gehäuse des Gasgenerators ist für sich allein so stabil, daß eine Umhüllung durch ein Gehäuse nicht erforderlich ist. Da die Schiebeleisten nicht über die gesamte Länge des Gasgenerators laufen müssen, kann auch der Einschiebeweg beim Montieren kürzer als die Länge des Gasgenerators sein.

In vorteilhafter Weise können die Schiebeleisten und die äußeren Schenkel der Führungsnuten zahnartig unterbrochen sein, wobei die Zähne der Schiebeleisten und die der äußeren Schenkel der Führungsnuten im wesentlichen deckungsgleich sind und die Zähne der Schiebeleisten in einer um eine halbe Zahnteilung versetzten Stellung die Zahnlücken der äußeren Schenkel passieren können.

Damit ist es möglich, den Gasgenerator mit dem Gehäuse über einen Schiebeweg von nur einer halben Zahnteilung zu verbinden, in dem die Zähne der Schiebeleisten in die Zahnlücken der Führungsnuten eingesetzt und dann der Gasgenerator gegenüber dem Gehäuse axial verschoben wird, so daß die Zähne von Schiebeleisten und Führungsnuten übereinander liegen. Das ist besonders dann von Vorteil, wenn der Gasgenerator unter den engen Raumverhältnissen im Kraftfahrzeug eingesetzt werden soll oder zu einer Inspektion ausgebaut und wieder eingesetzt wird.

Der Gasgenerator kann gegenüber dem Gehäuse gegen Verschieben durch ein Sicherungselement, z. B. eine die Führungsnut und die Schiebeleiste durchdringende Schraube, gesichert sein.

Ein solches Sicherungselement ermöglicht es, daß die Führung zwischen Führungsnut und Schiebeleiste leichtgängig ausgeführt werden kann, was die Montage- und Demontagemöglichkeit des Gasgenerators gegenüber einer unter Kraftschluß stehenden, also eingepreßten Verbindung erleichtert.

Die Sicherung gegen axiales Verschieben des Gasgenerators gegenüber dem Gehäuse kann jedoch auch durch eine Preßpassung der Schiebeleisten in den Führungsnuten erfolgen.

Ausführungsbeispiele der Erfindung sind nachstehend anhand einer Zeichnung näher erläutert. Es zeigen
- Fig. 1:: die wesentlichen Bestandteile eines Airbagmoduls im demontierten Zustand, perspektivisch dargestellt;
- Fig. 2:: eine abgewandelte Variante des Gasgenerators gegenüber der in Fig. 1 dargestellten;
- Fig. 3:: einen Schnitt durch das Gehäuse senkrecht zu dessen Längsachse;
- Fig. 4:: eine Einzelheit bei einer Führungsnut und einer Schiebeleiste als Ansicht in Richtung X nach Fig. 3.

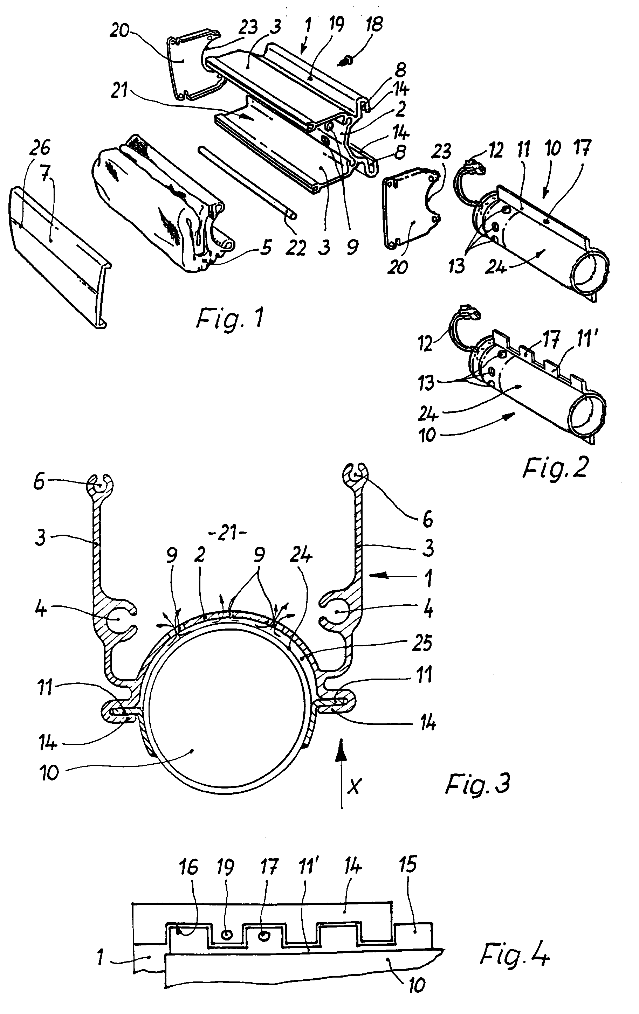

Ein als Strangpreßprofil gefertigter Grundkörper 1 eines Gehäuses für ein Airbagmodul weist eine nach innen gewölbte Bodenwand 2, zwei Seitenwandteile 3 mit Haltenuten 4 für die Befestigung eines Luftsackes 5 und zwei Haltenuten 6 für die Befestigung einer Abdeckung 7 sowie zur Bodenwand 2 hin zwei Führungsnuten 8 auf. Die Bodenwand 2 ist mit Öffnungen 9 versehen. Ein rohrförmiger Gasgenerator 10 hat entlang seiner Längsachse zwei Schiebeleisten 11, die im montierten Zustand des Airbagmoduls in die Führungsnuten 8 eingeschoben sind, einen elektrischen Anschluß 12 zur Kontaktierung mit einem nicht dargestellten Auslösesensor sowie zur Bodenwand 2 des Grundkörpers 1 hin gerichtete Gasaustrittsöffnungen 13. Die Schiebeleisten 11 können, wie in Fig. 1 dargestellt, als durchgehende Leisten oder, wie in Fig. 2 dargestellt, als gezahnte Schiebeleisten 11' ausgebildet sein. In diesem Fall sind auch die äußeren Schenkel 14 der Führungsnuten 8 in gleicher Weise gezahnt, und zwar so, daß die Zähne 15 der Schiebeleisten 11' durch die Zahnlücken 16 der Schenkel 14 geführt werden können. Eine der Schiebeleisten 11 bzw. 11' hat eine Fixierbohrung 17, an der mittels einer Schraube 18, die in eine Gewindebohrung 19 des Grundkörpers 1 eindrehbar ist, der Gasgenerator 10 gegenüber dem Grundkörper 1 gegen axiales Verschieben gesichert ist.

An den Stirnseiten ist der Grundkörper 1 mit jeweils einem Deckel 20 versehen, so daß zwischen den Seitenwandteilen 3, der Bodenwand 2 und den Deckeln 20 ein wannenförmiger Raum 21 entsteht. Dieser Raum 21 nimmt den zusammengefalteten Gassack 5 auf. Er ist über die beiden Längsseiten des Grundkörpers 1 mittels Füllerstäben 22 in den Haltenuten 4 gehalten.

Die Deckel 20 liegen mit einer Rundung 23 an der äußeren Kontur 24 des Gasgenerators 10 an. Zwischen der nach außen weisenden Fläche der Bodenwand 2 des Grundkörpers 1 und der äußeren Kontur 24 des Gasgenerators 10 ist ein im Querschnitt sichelförmiger Raum 25, der an den Stirnseiten mit den an der Kontur 24 des Gasgenerators 10 anliegenden Rundungen 23 der Deckel 20 geschlossen ist. Die Öffnungen 9 verbinden den Raum 25 unterhalb der Bodenwand 2 mit dem Raum 21 oberhalb der Bodenwand 2. Der Airbagmodul ist oberhalb des Gassackes 5 zum Fahrgastraum hin mit der Abdeckung 7 abgeschlossen, die in den Halteelementen 6 fixiert und mit einer Berstnaht 26 versehen ist.

Beim Aktivieren des Airbags wird vom Auslösesensor über den Anschluß 12 ein Auslösesignal zu dem Gasgenerator 10 geleitet, der durch die Gasaustrittsöffnungen 13 eine Gasmenge in den Raum 25 abgibt. Der sich im Raum 25 aufbauende Druck wird die Schiebeleisten 11, 11' gegen die Schenkel 14 der Führungsnuten 8 pressen, so daß kein Gas unkontrolliert aus dem Raum 25 entweichen kann. Der Druck kann sich im Raum 25 gleichmäßig verteilen und das Gas kann so gleichmäßig durch die Öffnungen 9 der Bodenwand 2 in den Raum 21 gelangen, und zwar unterhalb des in den Haltenuten 4 eingespannten Gassacks 5. Der Gassack 5 bläht sich unter der Wirkung des Gasdruckes auf, sprengt die Berstnaht 26 der Abdeckung 7 und entfaltet sich in den Fahrgastraum des Fahrzeuges hinein.

Muß der Gasgenerator 10 vom Grundkörper 1 des Gehäuses entfernt werden, sei es, weil nach dem Aktivwerden des Airbags ein neuer Gasgenerator eingebaut werden soll oder weil der Gasgenerator 10 außerhalb des Fahrzeuges überprüft werden soll, dann muß lediglich die als Sicherungselement dienende Schraube 18 aus der Gewindebohrung 19 entfernt werden, um den Gasgenerator 10 in Richtung seiner Längsachse aus den Führungsnuten 8 heraus ziehen zu können. Der dazu erforderliche Schiebeweg kann kürzer als der Gasgenerator 10 selbst sein und ist abhängig von der Länge der Schiebeleisten 11 bzw. von der Gestaltung der Schiebeleisten 11'. Werden die Schiebeleisten 11' gezahnt ausgeführt und die Schenkel 14 der Führungsnuten 8 mit einer analogen Verzahnung versehen, wie dies beispielhaft in Fig. 2 und Fig. 4 dargestellt ist, dann bedarf es nur eines sehr kurzen Schiebeweges, um den Gasgenerator 10 vom Grundkörper 1 zu trennen.

Der besondere Vorteil der Erfindung ist darin zu sehen, daß ein Airbagmodul mit einem Gehäuse, dessen Grundkörper 1 als Strangpreßprofil ausgeführt ist, ohne einen besonderen rohrförmigen Raum für den Gasgenerator 10 auskommen kann, so daß damit ein preiswertes Profil ohne rohrförmigen Profilteil und mit geringem Materialeinsatz Verwendung finden kann und der Airbagmodul so leichter als bekannte vergleichbare sind. Darüber hinaus hat ein solcher Airbagmodul Vorteile bei einer im Fahrzeug erforderlichen Entnahme des Gasgenerators 10.

## Patentansprüche

1. Airbagmodul zur Anordnung als Aufprallschutz für Fahrzeuginsassen eines Kraftfahrzeuges mit einem als Strangpreßprofil vorgefertigten Gehäuse, zwei die Stirnseiten des Gehäuses bildenden Deckeln, einem im Gehäuse befindlichen gefalteten und mit seinen Rändern am Gehäuse befestigten Gassack, einem unterhalb des Gassackes mit dem Gehäuse verbundenen rohrförmigen Gasgenerator und einer das Gehäuse zum Fahrgastraum abschließenden Abdeckung, **dadurch gekennzeichnet,** daß das Gehäuse nur einen den Gassack (5) aufnehmenden Raum (21) aufweist, daß eine Bodenwand (2) unterhalb des Gassackes (5) mit Öffnungen (9) versehen ist, und daß außerhalb des Gehäuses und benachbart zu der Bodenwand (2) Führungsnuten (8) vorgesehen sind, in welchen der Gasgenerator (10) an entlang der Längsachse des Gasgenerators (10) angebrachten Schiebeleisten (11, 11') gehalten ist.

2. Airbagmodul nach Anspruch 1, **dadurch gekennzeichnet,** daß die Schiebeleisten (11') und äußere Schenkel (14) der Führungsnuten (8) zahnartig unterbrochen sind, wobei die Zähne (15) der Schiebeleisten (11') und die der äußeren Schenkel (14) der Führungsnuten (8) im wesentlichen deckungsgleich sind und die Zähne (15) der Schiebeleisten (11') zwischen den Zahnlücken (16) der äußeren Schenkel (14) in einer um eine halbe Zahnteilung versetzten Stellung passieren können.

3. Airbagmodul nach Anspruch 1 oder 2, **dadurch gekennzeichnet,** daß der Gasgenerator (10) gegenüber dem Gehäuse gegen axiales Verschieben gesichert ist.

4. Airbagmodul nach Anspruch 3, **dadurch gekennzeichnet,** daß die Sicherung gegen axiales Verschieben durch eine Preßpassung der Schiebeleisten (11, 11') in den Führungsnuten (8) erfolgt.

5. Airbagmodul nach Anspruch 3, **dadurch gekennzeichnet,** daß die Sicherung gegen axiales Verschieben durch ein die Führungsnut (8) und die Schiebeleiste (11, 11') durchdringendes Sicherungselement (18) erfolgt.

## Claims

1. Airbag module, for arrangement as crash protection for vehicle passengers of a motor vehicle, with a housing prefabricated as an extruded profile, two caps forming the end faces of the housing, a folded gas bag located in the housing and attached by its edges to the housing, a tubular gas generator connected to the housing below the gas bag, and a cover closing off the housing from the passenger compartment, characterised in that the housing comprises only one chamber (21) receiving the gas bag (5), in that a bottom wall (2) below the gas bag (5) is provided with openings (9), and in that outside the housing and adjacent to the bottom wall (2) are provided guide grooves (8) in which the gas generator (10) is held on slide strips (11, 11') mounted along the longitudinal axis of the gas generator (10).

2. Airbag module according to claim 1, characterised in that the slide strips (11') and outer arm (14) of the guide grooves (8) are interrupted in tooth fashion, wherein the teeth (15) of the slide strips (11') and those of the outer arms (14) of the guide grooves (8) are essentially in register and the teeth (15) of the slide strips (11') can mate between the tooth gaps (16) of the outer arms (14) in a position offset by half a tooth pitch.

3. Airbag module according to claim 1 or 2, characterised in that the gas generator (10) is prevented from sliding axially relative to the housing.

4. Airbag module according to claim 3, characterised in that axial sliding is prevented by a force fit of the slide strips (11, 11') in the guide grooves (8).

5. Airbag module according to claim 3, characterised in that axial sliding is prevented by a locking element (18) passing through the guide groove (8) and the slide strip 11, 11').

## Revendications

1. Module de coussin gonflable destiné à être disposé comme protection pour les passagers d'un véhicule en cas de collision, comportant un boîtier préfabriqué sous forme de profilé extrudé, deux couvercles formant les faces frontales du boîtier, une poche à gaz pliée qui est disposée dans le boîtier et est fixée par ses bords audit boîtier, un générateur de gaz tubulaire qui est lié au boîtier en-dessous de la poche à gaz et un moyen de couverture qui ferme le boîtier en direction de l'habitacle, caractérisé par le fait que le boîtier comporte seulement une chambre (21) recevant la poche à gaz (5), par le fait qu'une paroi de fond (2) disposée en-dessous de la poche à gaz (5) est pourvue d'ouvertures (9) et par le fait qu'il est prévu à l'extérieur du boîtier et dans le voisinage de la paroi de fond (2) des rainures de guidage (8), dans lesquelles le générateur de gaz (10) est tenu par des nervures permettant le coulissement (11, 11') aménagées dans la direction de l'axe longitudinal du générateur de gaz (10).

2. Module de coussin gonflable selon la revendication 1, caractérisé par le fait que les nervures permettant le coulissement (11') et les ailes extérieures (14) des rainures de guidage (8) sont interrompues en forme de dents, les dents (15) des nervures permettant le coulissement (11') et des ailes extérieures (14) des rainures de guidage (8) étant essentiellement identiques et les dents (15) des nervures permettant le coulissement (11'), dans une position décalée d'un demi pas de division, pouvant s'engager les vides entre dents (16) de l'aile extérieure (14).

3. Module de coussin gonflable selon la revendication 1 ou 2, caractérisé par le fait que le générateur de gaz (10) est immobilisé contre tout déplacement dans la direction axiale par rapport au boîtier

4. Module de coussin gonflable selon la revendication 3, caractérisé par le fait que le blocage dans la direction axiale est réalisé par un ajustement serré des nervures permettant le coulissement (11, 11') dans les rainures de guidage (8).

5. Module de coussin gonflable selon la revendication 3, caractérisé par le fait que le blocage dans la direction axiale est réalisé par un élément de freinage (18) qui traverse la nervure permettant le coulissement (11, 11') et la rainure de guidage (8).
